# EUROPÄISCHE PATENTANMELDUNG

(11) **EP 4 321 021 A1**
(43) Veröffentlichungstag der Anmeldung: **14.02.2024**
(21) Anmeldenummer: 23401026.2
(22) Anmeldetag: 07.08.2023

(54) **STEUER- UND/ODER REGELSYSTEM, LANDWIRTSCHAFTLICHES NUTZFAHRZEUG**

(30) Priorität: 10.08.2022 DE 202022104554 U
(71) Anmelder: Amazonen-Werke H. Dreyer SE & Co. KG, 49205 Hasbergen (DE)
(72) Erfinder: Borchert, Anna-Gret, 49090 Osnabrück (DE); große Prues, Frank, 49593 Bersenbrück (DE)

(57) **Zusammenfassung**

Steuer- und/oder Regelsystem für ein landwirtschaftliches Nutzfahrzeug mit einem Verteilergestänge (12), welches sich quer zur Fahrtrichtung erstreckt und ein Mittelteil (2) und zwei mit dem Mittelteil (2) verbundene seitliche Ausleger (3) mit mehreren Gestängeabschnitten (4) aufweist, wobei jedem Ausleger (3) wenigstens eine hydraulische Einrichtung zugeordnet ist, wodurch das Verteilergestänge (12) von einer Transportstellung in eine Arbeitsstellung überführbar ist, und wobei das System wenigstens einen Sensor (15 a, b) und eine Datenverarbeitungseinheit aufweist, welche derart konfiguriert ist, dass die Signale des wenigstens einen Sensors (15 a, b) verarbeitet werden und auf deren Basis ein Stellsignal für die hydraulische Einrichtung generiert wird, und die hydraulische Einrichtung zur Einstellung der Dämpfung von am Verteilergestänge (12) auftretenden Schwingungen in Fahrtrichtung ansteuerbar ist, wobei der Sensor (15 a, b) ausgebildet ist, dass eine durch Schwingungen des Verteilergestänges (12) auftretende Druckänderung an der hydraulischen Einrichtung ermittelbar ist, und wobei die hydraulische Einrichtung einen Hydraulikzylinder (10 a, b) und wenigstens eine hydraulische Ventileinheit (16, 18a, 18b) umfasst, wobei die Ventileinheit über ein Steuersignal der Datenverarbeitungseinheit steuerbar ist, und dass der hydraulischen Ventileinheit, wenigstens eine Blende (20) zur Anpassung einer Durchflussmenge von Hydraulikflüssigkeit zugeordnet ist.

## Beschreibung

Die Erfindung betrifft ein Steuer- und/oder Regelsystem für ein landwirtschaftliches Nutzfahrzeug gemäß dem Oberbegriff des Patentanspruchs 1. Ferner betrifft die Erfindung ein landwirtschaftliches Nutzfahrzeug gemäß Anspruch 16.

Derartige Systeme werden für landwirtschaftliche Nutzfahrzeuge zum Ausbringen von Material, wie Düngemittel, Pflanzenschutzmittel oder Saatgut verwendet. Um das Material großflächig und effizient auf dem zu bearbeitenden Feldboden auszubringen, weisen die landwirtschaftlichen Nutzfahrzeuge ein Verteilergestänge mit mehreren Sprühdüsen auf. Das Verteilergestänge erstreckt sich quer zur Fahrtrichtung und kann Arbeitsbreiten von bis zu 40m aufweisen. Die Sprühdüsen, welche in regelmäßigem Abstand am Verteilergestänge angebracht sind, dienen der Ausbringung des Materials auf dem zu bearbeitenden Boden. Dabei soll der Abstand zwischen dem Verteilergestänge und dem Boden über die gesamte Arbeitsbreite des Verteilergestänges möglichst konstant bleiben. Das bedeutet, dass das Verteilergestänge möglichst parallel zum zu bearbeitenden Boden gehalten wird.

Bekanntermaßen weist das Verteilergestänge ein Mittelteil, beispielhaft einen mittig gelegenen Rahmen, und zwei mit dem Mittelteil verbundene seitliche Ausleger mit mehreren zueinander in Transportstellung einklappbaren und in Arbeitsstellung ausklappbaren, durch Gelenke verbundene Gestängeabschnitte auf. Dabei können die einzelnen Gestängeabschnitte über die zugehörigen Gelenke um vertikale Achsen verschwenkt werden und sind drehbar um die jeweilige vertikale Achse gelagert. Mittels der ausklappbaren Gestängeabschnitte kann das Verteilergestänge somit von einer platzsparenden Transportstellung in eine Arbeitsstellung überführt werden kann. Die Transportstellung beschreibt hierbei den eingeklappten Zustand des Verteilergestänges. Im Gegensatz dazu beschreibt die Arbeitsstellung jenen Zustand des Verteilergestänges, bei dem alle Gestängeabschnitte ausgeklappt sind. Mit anderen Worten weist das Verteilergestänge in der Arbeitsstellung die gesamte Arbeitsbreite auf und befindet sich in einer vollständigen horizontalen Ausgangslage parallel zum Boden.

Im Betrieb des landwirtschaftlichen Nutzfahrzeuges mit einer derartig großen Arbeitsbreite kann es beispielsweise aufgrund des Überfahrens von Unebenheiten im Boden, Beschleunigungen oder dem Abbremsen des Nutzfahrzeuges zu Schwingungen des Verteilergestänges in oder entgegengesetzt zur Fahrtrichtung kommen. Aufgrund derartiger Schwingungen können sehr hohe Kräfte am Verteilergestänge auftreten und eine homogene Materialausbringung kann nicht mehr garantiert werden. Es ist daher beispielhaft aus der EP 2 829 177 B1 bekannt, Stell- und/oder Dämpfungsmittel zwischen dem Mittelteil und dem Auslegern, bzw. zwischen den Gestängeabschnitten anzuordnen, derart, dass das Verteilergestänge einerseits von einer Transportstellung in eine Arbeitsstellung überführbar ist und andererseits eine Dämpfung von am Verteilergestänge auftretenden Schwingungen in Fahrtrichtung erfolgen kann. Die Stell- und/oder Dämpfungsmittel können bekanntermaßen als hydraulisch arbeitende Zylinder ausgebildet sein. Infolge von Schwingungen des Verteilergestänges entstehen hierbei Druckunterschiede in den hydraulischen Zylindern.

Zur Regelung der Dämpfung der Schwingungen sind daher die Stell- und/oder Dämpfungsmittel von einer Datenverarbeitungseinheit ansteuerbar. Hierzu wertet die Datenverarbeitungseinheit zur Generierung eines Stellsignals für die hydraulischen Zylinder die Signale von mehreren am Verteilergestänge angeordneten Sensoren zur Positions- und Geschwindigkeitsüberwachung des landwirtschaftlichen Nutzfahrzeuges aus. Mittels der Sensoren, wie beispielsweise Radarsensoren oder Impulsgebern, wird die aktuelle Bewegungsart des landwirtschaftlichen Nutzfahrzeuges bestimmt, also ermittelt, ob das Nutzfahrzeug mit einer kontinuierlichen Geschwindigkeit bewegt oder ob das Nutzfahrzeug beschleunigt oder verzögert wird. Die Positionsüberwachung des Verteilergestänges kann mittels eines Winkelsensors erfolgen.

Für eine effiziente Materialausbringung und zur Vermeidung von hohen mechanischen Belastungen am Verteilergestänge ist es generell notwendig, auftretende Schwingungen schnellstmöglich und auch unabhängig von der Bewegungsart des landwirtschaftlichen Nutzfahrzeuges zu dämpfen. Dabei ist es besonders wünschenswert, wenn die Dämpfung der Schwingungen variabel eingestellt werden kann.

Aus der DE 10 2017 104 814 A1 ist zudem bekannt, dass eine Dämpfung der Schwingungen an einem Verteilergestänge erreicht werden kann, indem die hydraulische Einrichtung bestehend aus mindestens einen Proportionalventil auf Basis ermittelter Daten von mindestens einen Drucksensor, welcher einem Hydraulikzylinder zugeordnet ist, das Proportionalventil derart angesteuert werden kann, dass der Durchfluss der Hydraulikflüsigkeit in Richtung des Hydraulikzylinders angepasst wird, um Schwingungen am Verteilergestänge entgegenzuwirken. Die Verwendung von Proportionalventilen hat den Nachteil, dass diese kostenintensiv, wenig robust und die Schaltung komplex ist.

Der Erfindung liegt daher die Aufgabe zugrunde, ein Steuer- und/oder Regelsystem für ein landwirtschaftliches Nutzfahrzeug anzugeben, bei dem eine präzise und variabel einstellbare Dämpfung von auftretenden Schwingungen in oder entgegengesetzt zur Fahrtrichtung erfolgen kann.

Diese Aufgabe wird erfindungsgemäß durch ein Steuer- und/oder Regelsystem mit den Merkmalen des Anspruchs 1 gelöst. Im Hinblick auf das landwirtschaftliche Nutzfahrzeug wird die Aufgabe durch den Gegenstand des Anspruchs 15 gelöst.

Die Erfindung beruht auf dem Gedanken, ein Steuer- und/oder Regelsystem für ein landwirtschaftliches Nutzfahrzeug anzugeben, mit einem Verteilergestänge zum Ausbringen von Material, wie Düngemittel, Pflanzenschutzmittel oder Saatgut, welches sich quer zur Fahrtrichtung erstreckt und ein Mittelteil und zwei mit dem Mittelteil verbundene seitliche Ausleger mit mehreren zueinander in Transportstellung einklappbaren und in Arbeitsstellung ausklappbaren, durch Gelenke verbundene Gestängeabschnitte aufweist. Jedem Ausleger ist wenigstens eine hydraulische Einrichtung zugeordnet, wodurch das Verteilergestänge von einer Transportstellung in eine Arbeitsstellung überführbar ist. Das System weist weiterhin wenigstens einen Sensor und eine Datenverarbeitungseinheit auf, welche derart konfiguriert ist, dass die Signale des wenigstens einen Sensors verarbeitet werden und auf deren Basis ein Stellsignal für die hydraulische Einrichtung generiert wird, und die hydraulische Einrichtung zur Einstellung der Dämpfung von am Verteilergestänge auftretenden Schwingungen in Fahrtrichtung ansteuerbar ist. Der Sensor ist derart ausgebildet, dass eine durch Schwingungen des Verteilergestänges auftretende Druckänderung an der hydraulischen Einrichtung ermittelbar ist. Die hydraulische Einrichtung umfasst einen Hydraulikzylinder, vorzugsweise ein doppeltwirkender Hydraulikzylinder, und wenigstens eine hydraulische Ventileinheit. Die Ventileinheit ist über ein Steuersignal der Datenverarbeitungseinheit steuerbar. Weiter ist der hydraulischen Ventileinheit wenigstens eine Blende zur Anpassung einer Durchflussmenge der Hydraulikflüssigkeit zugeordnet. Ferner kann die hydraulische Einrichtung eine Hydraulikleitung, welche zur Zufuhr von Hydraulikflüssigkeit an den Hydraulikzylinder angeschlossen ist, umfassen.

Die Erfindung hat den Vorteil, dass mittels der Datenverarbeitungseinheit die Dämpfung der am Verteilergestänge auftretenden Schwingungen variabel eingestellt und/oder verstellt werden kann. Das bedeutet, dass bei starken Schwingungen des Verteilergestänges eine stärkere Dämpfung erfolgen kann, und bei geringen Schwingungen des Verteilergestänges eine dementsprechend geringere Dämpfung. Hierbei ist es von besonderem Vorteil, dass mittels des Sensors die Druckänderung an der hydraulischen Einrichtung ermittelbar ist. Da demnach die auftretende Druckänderung bekannt ist, kann die Datenverarbeitungseinheit unmittelbar und direkt auf die auftretende Druckänderung die Dämpfung einstellen. Es erfolgt daher eine präzise und schnellstmögliche Anpassung der Dämpfung von Schwingungen, welche unabhängig vom aktuellen Betriebszustand des Nutzfahrzeuges erfolgen kann. Es muss daher nicht über andere Messdaten von anderweitig ausgebildeten Sensoren ein Rückschluss auf die auftretende Druckänderung gezogen werden, oder die Druckänderung aus anderweitig bestimmten Messdaten berechnet werden, sondern die Druckänderung kann direkt ermittelt werden. Folglich kann den auftretenden Schwingungen effizient entgegengewirkt werden. Es sind aufgrund der direkten Ermittlung der Druckänderung an der hydraulischen Einrichtung Störeffekte oder Überlagerungen von Messfehlern, welche sich negativ auf die Messsignale von anderweitig ausgebildeten Sensoren auswirken können, bereits kompensiert. Der Einsatz einer Hydraulikflüssigkeit hat den Vorteil, dass die Reibung innerhalb der hydraulischen Einrichtung vermindert ist und gleichzeitig Korrosionsschutz gewährleistet werden kann. Die hydraulische Einrichtung kann als Aktor ausgebildet sein, um die elektrischen Steuersignale der Datenverarbeitungseinheit in eine mechanische Bewegung umzuwandeln und damit das Verteilergestänge sowohl von einer Transportstellung in eine Arbeitsstellung zu überführen, als auch die Dämpfung von am Verteilergestänge auftretenden Schwingungen in Fahrtrichtung zu gewährleisten. Die hydraulischen Ventileinheiten sorgen hierbei, insbesondere in Verbindung mit einer Blende, vorteilhafterweise für einen sicheren und schnell wirkenden Überlastungsschutz des Hydraulikzylinders. Insgesamt kann der Hydraulikdruck am Hydraulikzylinder mittels einer hydraulischen Ventileinheit, welche von der Datenverarbeitungseinheit mittels eines Steuersignals angesteuert werden kann, optimal eingestellt werden.

Die Datenverarbeitungseinheit weist vorzugsweise ein Steuer und/oder Auswertprogramm auf, welches die Signale des wenigstens einen Sensors als Eingangsgröße verarbeiten und auswerten, und basierend darauf ein Stellsignal für die jeweilige hydraulische Einrichtung generieren kann.

Bevorzugte Ausführungsformen der Erfindung sind in den Unteransprüchen angegeben.

Bei einer bevorzugten Ausführungsform der Erfindung ist der Sensor derart ausgebildet, dass ein Druckunterschied an der hydraulischen Einrichtung messbar ist. Demnach kann die auftretende Druckänderung direkt und unmittelbar mittels des Sensors gemessen werden. Das bedeutet, dass die Datenverarbeitungseinheit als Eingangsgröße für die Einstellung der Dämpfung einen direkt gemessenen Wert für den Druckunterschied erhält. Die Messung des Druckunterschieds hat den Vorteil, dass bereits ein genauer Wert der auftretenden Druckänderung an der hydraulischen Vorrichtung bekannt ist, und daher die Datenverarbeitungseinheit schnellstmöglich und präzise die Dämpfung an den vom Sensor gemessenen Druckunterschied anpassen, bzw. einstellen und/oder verstellen kann.

Weiter vorzugsweise ist der Sensor als Drucksensor zur direkten Druckmessung, insbesondere als Druckmessumformer, ausgebildet. Die Ausbildung des Sensors als Drucksensor hat den Vorteil, dass hierdurch sowohl ein Relativdruck, als auch ein Absolutdruck ermittelt werden können. Weiterhin kann der Sensor vorzugsweise als Differenzdruckmessumformer zur Ermittlung eines Differenzdrucks, beziehungsweise eines auftretenden Druckunterschieds, ausgebildet sein. Die Ausbildung des Sensors als Druckmessumformer eignet sich besonders beim Einsatz von hydraulischen Einrichtungen. Vorteilhafterweise kann der Druckmessumformer den zu messenden Druck über eine Messmembran erfassen, welche in Abhängigkeit vom jeweiligen Druck mechanisch umgeformt wird. Diese mechanische Veränderung wird elektronisch gemessen und als analoges Ausgangssignal ausgegeben und an die Datenverarbeitungseinheit übermittelt. In bevorzugter Weise sind zwei Sensoren einer hydraulischen Einrichtung zugeordnet. Hierdurch kann sich ebenfalls ein Differenzdruck ermitteln lassen. Dies hat den Vorteil, dass auftretende Druckunterschiede möglichst präzise bestimmt werden können.

Alternativ ist es auch denkbar im Vergleich zur direkten Druckmessung an der hydraulischen Einrichtung mittels eines Drucksensors, indirekt auf eine auftretende Druckänderung Rückschlüsse zu ziehen. Hierbei kann die Position, beziehungsweise der Winkel der Gestängeabschnitte beispielhaft durch einen Potentiometer erfasst werden. Das Potentiometer ermittelt hierbei, ob ein einzelner Gestängeabschnitt oder auch der gesamte Ausleger aufgrund einer Schwingung aus seiner horizontalen Lage ausgelenkt wird und wie sich dessen Position, bzw. Lage verändert. Hieraus kann prinzipiell auch auf eine auftretende Druckänderung aufgrund der Auslenkung geschlossen werden. Die direkte Ermittlung der auftretenden Druckänderung, bzw. die Messung des Druckunterschieds hat jedoch den Vorteil, dass ein robuster und solider Messwert und damit eine verlässliche Eingangsgröße ohne Störeffekte für die Datenverarbeitungseinheit bereitgestellt werden kann.

Besonders bevorzugt umfasst die hydraulische Einrichtung einen Hydraulikzylinder, verzugsweiseeinen doppeltwirkenden Hydraulikzylinder, eine Hydraulikleitung, welche zur Zufuhr von Hydraulikflüssigkeit an den Hydraulikzylinder angeschlossen ist, und wenigstens eine hydraulische Ventileinheit zur Regelung des Hydraulikdrucks, wobei die Ventileinheit über ein Stellsignal der Datenverarbeitungseinheit steuerbar ist. Generell hat der Einsatz einer Hydraulikflüssigkeit den Vorteil, dass die Reibung innerhalb der hydraulischen Einrichtung vermindert ist und gleichzeitig Korrosionsschutz gewährleistet werden kann. Die hydraulische Einrichtung kann generell als Aktor ausgebildet sein, um die elektrischen Stellsignale der Datenverarbeitungseinheit in eine mechanische Bewegung umzuwandeln und damit das Verteilergestänge sowohl von einer Transportstellung in eine Arbeitsstellung zu überführen, als auch die Dämpfung von am Verteilergestänge auftretenden Schwingungen in Fahrtrichtung zu gewährleisten. Die hydraulische Ventileinheit sorgt hierbei vorteilhafterweise für einen sicheren und schnell wirkenden Überlastungsschutz des Hydraulikzylinders. Insgesamt kann der Hydraulikdruck am Hydraulikzylinder mittels der hydraulischen Ventileinheit, welche von der Datenverarbeitungseinheit mittels eines Stellsignals angesteuert werden kann, optimal eingestellt werden.

In einer weiteren bevorzugten Ausführungsform der erfindungsgemäßen Erfindung, umfasst die hydraulische Einrichtung mindestens ein binär umschaltbares Ventil. Bei der Verwendung eines binär umschaltbaren Ventils - in anderen Worten, eines Schwarz-Weiß-Ventils - insbesondere in Verbindung mit einer Blende ist die geringe komplexe Schaltung und Langlebigkeit gegenüber dem bisherigen Stand der Technik vorteilhaft. Dies führt zu einer vereinfachten Schaltung und somit zu einer geringeren Fehleranfälligkeit aufgrund von Verschleiß bei fortlaufendem Arbeitseinsatz des landwirtschaftlichen Nutzfahrzeuges.

Vorzugsweise umfasst die hydraulische Einrichtung eine Ventileinheit, welche als binär umschaltbares 4/3-Wegeventil ausgebildet ist. In einer anderen bevorzugten Ausführungsform der hydraulischen Einrichtung mit mehren, bevorzugt 2 Ventileinheiten, sind diese nach Art als binär umschaltbare 2/2 Wegeventile ausgebildet. Die Ventileinheiten sind mit mehreren Schaltstellungen ausgebildet, vorzugsweise 2 oder 3 Schaltstellungen, und weisen zumindest eine offene und eine geschlossene Schaltstellung auf. Diese einfache Funktionsweise reduziert die Fehleranfälligkeit erheblich.

Des Weiteren umfasst die erfinderische Erfindung wenigstens eine Blende, welche austauschbar und/oder verstellbar ausgebildet ist. Diese Blende ist vorzugsweise nach der maximalen oder entsprechend der Einsatzgegebenheiten erforderlichen Gestängebreite der landwirtschaftlichen Maschine auswählbar und/oder einstellbar, so dass ein optimaler Volumenstrom für die jeweilige Gestängebreite gewährleistet ist. Dies hat den Vorteil, dass die Einstellung nur einmal bei der Fertigung stattfinden muss und einem Verschleiß durch häufiges verstellen vorgebeugt ist. Alternativ oder zusätzlich ist denkbar, dass der Austausch der jeweiligen Blende anzustreben ist, um unterschiedliche Maschinenkonfigurationen oder Betriebszustände zum Ausbringen und den benötigten Volumenstrom anpassen zu können.

Vorzugsweise ist basierend auf einem gemessenen Signal des Sensors oder einem anderweitig ermittelten Istwert, die jeweilige hydraulische Ventileinheit einstellbar. Es ist generell denkbar, dass zusätzlich zu dem wenigstens einen Sensor zur Ermittlung einer auftretenden Druckänderung an der hydraulischen Einrichtung noch weitere Sensoren eingesetzt werden, um die Position eines einzelnen Gestängeabschnittes oder des Auslegers des Verteilergestänges zu ermitteln und dahingehend indirekt auf eine auftretende Druckänderung zu schließen. Die Ermittlung der auftretenden Druckänderung an der hydraulischen Einrichtung ermöglicht insgesamt eine präzise Anpassung der Dämpfung von auftretenden Schwingungen. Die Druckänderung kann hierbei direkt mittels des Sensors gemessen werden, oder anderweitig und indirekt über weitere Sensoren ermittelt werden.

In einer weiteren bevorzugten Ausführungsform sind weitere Sensoren am Verteilergestänge zur Erfassung einer Rotation um eine Klappachse und/oder Positionserfassung des jeweiligen Gestängeabschnitts und/oder Auslegers angeordnet. Diese Sensoren können vorteilhafterweise als Potentiometer ausgebildet sein und die Position des Verteilergestänges und/oder der einzelnen Gestängeabschnitte ermitteln. Das Potentiometer ermittelt hierbei, ob ein einzelner Gestängeabschnitt oder auch der gesamte Ausleger aufgrund einer Schwingung aus seiner horizontalen Lage ausgelenkt wird und wie sich dessen Position, bzw. Lage verändert. Die Klappachse, um die die Gestängeklappung vollführt wird, ist vorzugsweise vertikal orientiert, besitzt jedoch zumindest eine vertikale Komponente. Die Positionserfassung kann beispielsweise mittels einer Messung der Auslenkung des Hydraulikzylinders erfolgen.

In einer weiteren Ausführungsform ist basierend auf einem gemessenen Signal des Sensors hinsichtlich einer auftretenden Druckänderung an der hydraulischen Einrichtung und unter Berücksichtigung eines aufgrund einer Nickneigung des landwirtschaftlichen Nutzfahrzeuges auftretenden Druckoffsets und/oder basierend auf den gemessenen Signalen der Sensoren hinsichtlich einer auftretenden Rotation um eine Klappachse und/oder Positionserfassung des jeweiligen Gestängeabschnitts und/oder Auslegers, die hydraulische Einrichtung einstellbar. Beispielhaft kann das Messsignal des Sensors hinsichtlich einer auftretenden Druckänderung an der hydraulischen Einrichtung unter Berücksichtigung eines Druckoffsets von der Datenverarbeitungseinheit ausgewertet werden. Durch die Berücksichtigung eines Druckoffsets kann eine extern wirkende Kraft auf das Verteilergestänge berücksichtigt werden. Derartige Kräfte können beispielsweise bei Nickneigungen des landwirtschaftlichen Nutzfahrzeuges in oder entgegengesetzt zur Fahrtrichtung auftreten. Somit kann basierend auf einer Kombination des Druckoffsets mit der Messung der auftretenden Druckänderung die hydraulische Ventileinheit von der Datenverarbeitungseinheit eingestellt werden. Alternativ oder zusätzlich kann beispielhaft mittels eines Potentiometers die Rotation der Klappachse des jeweiligen Gestängeabschnitts und/oder Auslegers ermittelt werden. Dabei kann die Datenverarbeitungseinheit hinsichtlich der Klappachse einen Soll- IstwertVergleich durchführen und, basierend auf der Regeldifferenz und in Kombination mit dem Druckoffset und der Messung der auftretenden Druckänderung an der hydraulischen Einrichtung, die hydraulische Ventileinheit einstellen. Die Kombination von verschiedenen Messwerten in der Datenverarbeitungseinheit ermöglicht eine sehr präzise Einstellung der hydraulischen Ventileinheit. Ebenso können etwaige auftretende Messungenauigkeiten kompensiert werden.

Insgesamt kann von der Datenverarbeitungseinheit, basierend auf dem Messsignal des Sensors oder der aktuellen Position des Gestängeabschnittes oder des Auslegers, die zugehörige hydraulische Ventileinheit der hydraulischen Einrichtung zur Dämpfung von am Verteilergestänge auftretenden Schwingungen angesteuert, bzw. eingestellt werden. Es ist generell denkbar, die gemessenen Signale des Sensors auch in einem Regelsystem als Istwert und zur Anpassung eines Sollwertes zu verwenden. Dabei kann die Datenverarbeitungseinheit derart konfiguriert sein, oder anders gesagt ein derartiges Regel- und/oder Auswerteprogramm aufweisen, dass basierend auf den gemessenen Signal des wenigstens einen Sensors als Eingangsgröße für die Regelung ein entsprechender Sollwert für die jeweilige hydraulische Einrichtung ermittelt wird, und die hydraulische Einrichtung auf den Sollwert dahingehend geregelt, bzw. eingestellt wird.

In einer weiteren Ausführungsform ist die wenigstens eine hydraulische Ventileinheit der jeweiligen hydraulischen Einrichtung unabhängig von der Datenverarbeitungseinheit ein- und/oder verstellbar. Das bedeutet, dass die hydraulische Ventileinheit der zugehörigen hydraulischen Einrichtung des jeweiligen Auslegers unabhängig voneinander über ein elektronisches Signal von der Datenverarbeitungseinheit angesteuert werden kann. Daher ist das Steuer- und/oder Regelsystem effizient sowohl für symmetrische, als auch für asymmetrische Verteilergestänge verwendbar.

Vorteilhafterweise steht die an dem jeweiligen Hydraulikzylinder angeschlossene Hydraulikleitung mit zumindest einem Hydraulikspeicher in Verbindung. Es ist denkbar, dass das Steuer- und/oder Regelsystem einen zentralen Hydraulikspeicher umfasst oder alternativ jeweils ein Hydraulikspeicher dem rechtsseitigen oder linksseitigen Ausleger des Verteilergestänges zugeordnet ist. Durch den Hydraulikspeicher wird vorteilhafterweise der in dem Hydraulikzylinder wirkende Hydraulikdruck erzeugt.

Weiter vorzugsweise sind dem jeweiligen Hydraulikzylinder zwei Drucksensoren in der Hydraulikleitung derart zugeordnet, dass sowohl der anliegende Druck an einer Kolbenfläche und an einer Ringfläche des Hydraulikzylinders ermittelbar sind. Somit kann eine präzise Druckmessung am Hydraulikzylinder, oder anders gesagt eine präzise Bestimmung des am Hydraulikzylinder auftretenden Druckunterschieds aufgrund von Schwingungen des Verteilergestänges erfolgen.

In einer weiteren Ausführungsform bilden die dem jeweiligen Ausleger zugeordneten hydraulischen Einrichtungen einen geschlossenen Hydraulikkreislauf, wobei die Hydraulikzylinder der hydraulischen Einrichtungen mittels einer gemeinsamen Hydraulikleitung verbunden sind. Idealerweise kann somit auf die Anbringung von einzelnen separaten Hydraulikleitungen verzichtet werden und die Sensoren zur Ermittlung einer auftretenden Druckänderung an den hydraulischen Einrichtungen auch an der gemeinsamen Hydraulikleitung angebracht werden.

Vorteilhafterweise ist ein Drucksensor derart in der gemeinsamen Hydraulikleitung angeordnet, dass der Druck an der Ringfläche aller Hydraulikzylinder ermittelbar ist. In diesem Fall ist der Druck an den Ringflächen der Hydraulikzylinder zumindest näherungsweise identisch.

In einer bevorzugten Ausführungsform bildet die Datenverarbeitungseinheit mit dem wenigstens einen Sensor und der wenigstens einen hydraulischen Einrichtung eine Einheit. Dies impliziert eine direkte Verbindung, beispielsweise über Kabelleitungen oder kabellos, zwischen dem Sensor und der Datenverarbeitungseinheit, sowie der hydraulischen Einrichtung. Daher kann das von dem Sensor erfasste Messsignal effizient und schnellstmöglich an die hydraulische Einrichtung zur Schwingungsdämpfung über ein elektrisches Steuersignal der Datenverarbeitungseinheit weitergegeben werden.

Im Rahmen der vorliegenden Anmeldung wird weiterhin ein landwirtschaftliches Nutzfahrzeug zum Ausbringen von Material, wie Düngemittel, Pflanzenschutzmittel oder Saatgut mit einem Steuer- und/oder Regelsystem nach einem der vorhergehenden Ausführungsformen beansprucht.

Weiter vorzugsweise wird basierend auf einem gemessenen Signal des Sensors oder einem anderweitig ermittelten Istwert, die wenigstens eine hydraulische Einrichtung mittels der Datenverarbeitungseinheit eingestellt und/oder verstellt.

Vorteilhafterweise werden die jeweiligen hydraulischen Einrichtungen der Ausleger unabhängig voneinander ein- und/oder verstellt.

Die Erfindung wird nachstehend mit weiteren Einzelheiten unter Bezug auf die beigefügten schematischen Zeichnungen näher erläutert. Die dargestellten Ausführungsformen stellen lediglich Beispiele dar, wie das erfindungsgemäße Steuer- und/oder Regelsystem ausgestaltet sein kann und stellen keine abschließende Begrenzung dar. Darin zeigen
- Fig. 1: eine perspektivische Detailansicht eines Verteilergestänges mit einem erfindungsgemäßen Steuer- und/oder Regelsystem und mit einem Mittelteil und zwei mit dem Mittelteil verbundene seitliche Ausleger;
- Fig. 2: eine schematische Prinzipdarstellung eines Hydraulikschaltplans für ein erfindungsgemäßes Steuer- und/oder Regelsystem gemäß einem ersten Ausführungsbeispiel;
- Fig. 3: eine schematische Prinzipdarstellung eines Hydraulikschaltplans für ein erfindungsgemäßes Steuer- und/oder Regelsystem gemäß einem weiteren Ausführungsbeispiel;
- Fig. 4: eine schematische Prinzipdarstellung eines Hydraulikschaltplans für ein erfindungsgemäßes Steuer- und/oder Regelsystem gemäß einem dritten Ausführungsbeispiel;
- Fig. 5: eine schematische Prinzipdarstellung eines erfindungsgemäßen Steuer- und/oder Regelsystems gemäß einem vierten Ausführungsbeispiel;

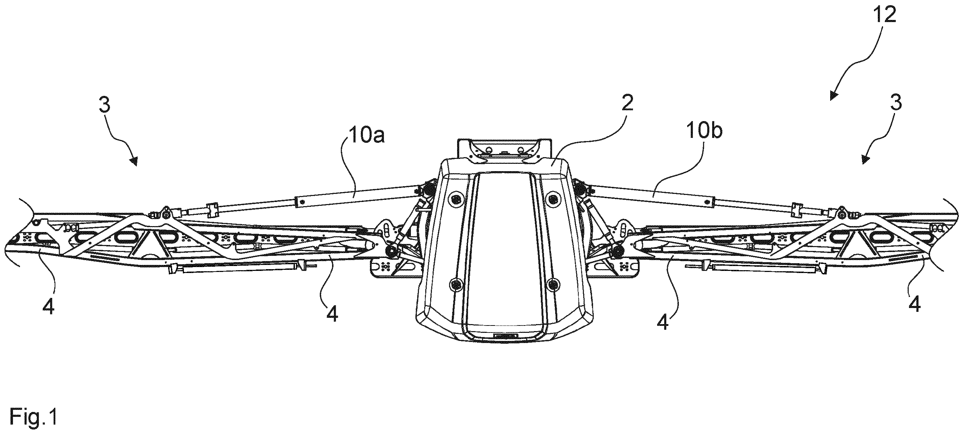

Fig. 1 zeigt eine perspektivische Detailansicht eines Verteilergestänges 12 mit einem erfindungsgemäßen Steuer- und/oder Regelsystem für ein landwirtschaftliches Nutzfahrzeug. Das Verteilergestänge 12 dient der Ausbringung von Material, wie Düngemittel, Pflanzenschutzmittel oder Saatgut und erstreckt sich quer zur Fahrtrichtung. Das Verteilergestänge 12 weist ein Mittelteil 2 und zwei mit dem Mittelteil 2 verbundene seitliche Ausleger 3 mit mehreren zueinander in Transportstellung einklappbaren und in Arbeitsstellung ausklappbaren, durch Gelenke verbundene Gestängeabschnitte 4 auf. Dem rechten und linken Ausleger 3 sind jeweils ein Hydraulikzylinder 10 a, b zugeordnet, welche mit dem Mittelteil 2 und dem jeweiligen Ausleger 3 verbunden sind. Mittels des jeweiligen Hydraulikzylinders 10 a, b ist der jeweilige Ausleger 3 und damit das Verteilergestänge 12 von einer Transportstellung in eine Arbeitsstellung überführbar. Dabei klappen die Hydraulikzylinder 10 a, b das Verteilergestänge 12 über vertikale Achsen in Arbeits- und Transportstellung.

Im Bereich der Hydraulikzylinder 10 a, b können nicht dargestellte Sensoren zur Erfassung der Arbeitsstellung des Verteilergestänges angebracht sein. Beispielhaft können die Sensoren als Potentiometer ausgebildet sein. Damit lässt sich die Position oder Arbeitsstellung der Kolbenstange des Hydraulikzylinders bestimmen. Ein entsprechendes Mess- oder Positionssignal kann über eine Datenleitung an eine nicht dargestellte Datenverarbeitungseinheit übermittelt werden, die basierend auf dem Messsignal den Klappvorgang der Gestängeabschnitt steuert. Die Datenverarbeitungseinheit ist hierbei derart konfiguriert, dass die Signale der Sensoren verarbeitet werden können und auf deren Basis ein Stellsignal für die Hydraulikzylinder generiert werden kann. Somit kann mittels der Potentiometer zur Positionserfassung der Ausklappvorgang des Verteilergestänges erfasst werden.

Wenn sich das Verteilergestänge in der Arbeitsstellung befindet, oder anders gesagt komplett ausgeklappt ist, können mittels des Steuer- und/oder Regelsystems auftretende Schwingungen am Verteilergestänge über die Hydraulikzylinder 10 a, b gedämpft und das Verteilergestänge 12 in seiner Solllage gehalten werden. Die Solllage des Verteilergestänges 12 zeichnet sich dadurch aus, dass keine Relativbewegung zwischen dem, das Verteilergestänge tragenden Nutzfahrzeug, und dem Verteilergestänge selbst, insbesondere in Fahrtrichtung, auftritt.

Hierzu umfasst das Steuer- und/oder Regelsystem nicht dargestellte Sensoren, welche derart ausgebildet sind, dass eine durch Schwingungen des Verteilergestänges 12 auftretende Druckänderung an den Hydraulikzylindern 10 a, b ermittelbar ist. Im Speziellen kann mittels der vorzugsweise als Drucksensoren ausgebildeten Sensoren ein Druckunterschied am jeweiligen Hydraulikzylinder 10 a, b gemessen werden. Basierend auf den Messsignalen der Drucksensoren kann die Datenverarbeitungseinheit eine dem jeweiligen Hydraulikzylinder 10 a, b zugeordnete nicht dargestellte hydraulische Ventileinheit ansteuern, wodurch ein Druckausgleich und damit eine Dämpfung der auftretenden Schwingungen erzielt werden kann.

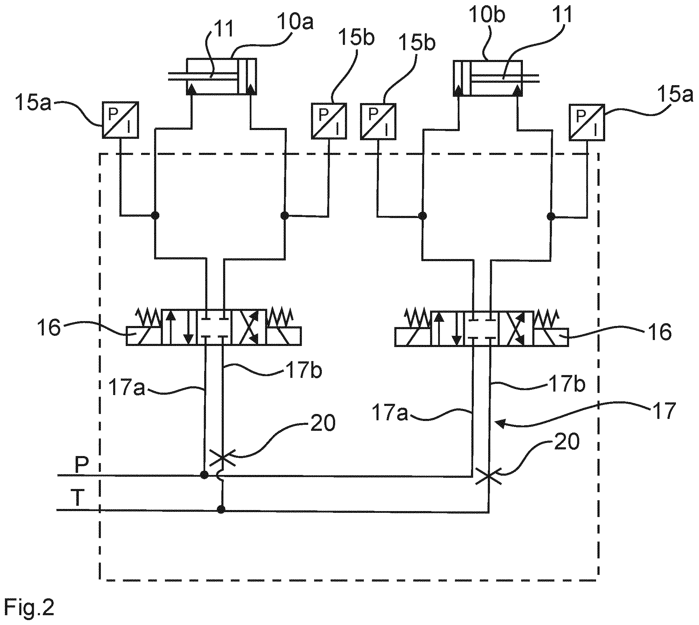

Die Figuren 2-4 zeigen schematische Prinzipdarstellungen eines Hydraulikschaltplans für ein erfindungsgemäßes Steuer- und/oder Regelsystem. Beispielhaft werden verschiedene Hydraulikschaltpläne gezeigt. Es wird darauf hingewiesen, dass weitere Komponenten vorhanden sein können, aber für die einfache schematische Anordnung in den Figuren nicht dargestellt sind.

Fig. 2 stellt einen Hydraulikschaltplan für eine hydraulische Einrichtung nach einem erfindungsgemäßen Ausführungsbeispiel für die Druckbeaufschlagung des rechten und linken Hydraulikzylinder 10 a, b gemäß Fig. 1 zur Überführung des Verteilergestänges von einer Transportstellung in eine Arbeitsstellung und zur Einstellung der Dämpfung von am Verteilergestänge auftretenden Schwingungen in Fahrtrichtung dar. Der rechte und linke Hydraulikzylinder 10 a, b sind beispielhaft als doppeltwirkende Hydraulikzylinder ausgebildet. Die Hydraulikzylinder 10 a, b sind mit dem Verteilergestänge gemäß Fig. 1 wie oben beschrieben verbunden. Über die Hydraulikleitung 17 sind die Hydraulikzylinder 10 a, b mit einem nicht dargestellten Hydraulikreservoir verbunden. Das Hydraulikreservoir enthält eine Hydraulikflüssigkeit, welche über die Hydraulikleitung 17 dem jeweiligen Hydraulikzylinder 10 a, b zugeführt werden kann. Dabei ist die Hydraulikleitung 17 durch eine Druck-Leitung, welche in den Figuren mit dem Bezugszeichen P gekennzeichnet ist, sowie eine Hydraulikreservoir-Leitung, welche mit dem Bezugszeichen T gekennzeichnet ist, gebildet.

Dem rechten und linken Hydraulikzylinder 10 a, b sind jeweils zwei Drucksensoren 15 a, b zugeordnet. Dabei sind die beiden Drucksensoren 15 a, b dem Hydraulikzylinder derart zugeordnet, dass sowohl ein Druck an einer Kolbenfläche, als auch an einer Ringfläche des Hydraulikzylinders 10 a, b ermittelt werden kann.

Der Hydraulikzylinder 10 a, b weist an den zwei Seiten des Kolbens 11 zwei verschieden große Wirkflächen auf. Die der Kolbenstange zugewandte Wirkfläche des Hydraulikzylinders ist hierbei kleiner als die der Kolbenstange abgewandten Wirkfläche. Demnach misst der Drucksensor 15a an der Ringfläche einen unterschiedlichen, insbesondere kleineren, Druck als der Drucksensor 15b an der Kolbenfläche.

Die Drucksensoren 15 a, b sind zur Messung des Drucks an der Ring- und Kolbenfläche des Hydraulikzylinders 10 a, b an eine Zuführleitung 17a und eine Abführleitung 17b des jeweiligen Hydraulikzylinders 10a, b angeschlossen. Die Zuführleitung 17a der Hydraulikleitung 17 beschreibt im Rahmen der Anmeldung jenen Abschnitt der Hydraulikleitung 17, welcher das nicht dargestellte Hydraulikreservoir mit der Ringfläche des Hydraulikzylinders 10 a, b verbindet. Im Gegensatz dazu beschreibt im Rahmen der Anmeldung die Abführleitung 17b der Hydraulikleitung 17 jenen Abschnitt der Hydraulikleitung 17, welcher das Hydraulikreservoir mit der Kolbenfläche des Hydraulikzylinders 10 a, b verbindet.

Die Drucksensoren 15 a, b sind hierbei beispielhaft als Druckmessumformer ausgebildet. Der Druckmessumformer stellt generell einen elektrischen Messumformer zur Messung des vorhandenen Drucks im Hydraulikzylinder 10 a, b dar. Somit ist mittels des Drucksensors eine durch Schwingungen des Verteilergestänges auftretende Druckänderung ermittelbar. Beispielhaft kann mittels der Druckmessumformer 15 a, b ein Druckunterschied am Hydraulikzylinder 10 a, b und damit an der hydraulischen Einrichtung gemessen werden.

Weiterhin ist jedem Hydraulikzylinder 10 a, b eine hydraulische Ventileinheit zur Regelung des Hydraulikdrucks zugeordnet. Dabei ist die hydraulische Ventileinheit in der Hydraulikleitung 17 angeordnet und beispielhaft als binär umschaltbares Ventil16, oder anders gesagt als Mehrwegeventil ausgebildet. Die dem jeweiligen Hydraulikzylinder 10 a, b zugeordneten Drucksensoren 15 a, b sind an der Zuführleitung 17a und Abführleitung 17b zwischen dem Hydraulikzylinder 10 a, b und dem zugehörigen binär umschaltbaren Ventil16 angeordnet. Das binär umschaltbare Ventil16 ist hierbei im Speziellen als 4/3-Wegeventilausgebildet.

An der Hydraulikleitung 17, an der Abführleitung 17b ist dem binär umschaltbaren Ventil 16 eine Blende 20 zur Anpassung der Durchflussmenge der Hydraulikflüssigkeit, zugeordnet. Das binär umschaltbaren Ventil 16 kann von einer nicht dargestellten Datenverarbeitungseinheit angesteuert und eingestellt werden. Hierzu ist das binär umschaltbare Ventil16 mit der Datenverarbeitungseinheit, beispielsweise über Kabelleitungen oder kabellos verbunden. Die Datenverarbeitungseinheit ist weiterhin mit den Drucksensoren 15 a, b verbunden. Basierend auf den von den Drucksensoren 15 a, b ermittelten Signalen kann die Datenverarbeitungseinheit das Proportionalventil 16 ansteuern. Im Speziellen kann das binär umschaltbaren Ventil16, welches dem jeweiligen Hydraulikzylinder 10 a, b zugeordnet ist, zum Druckausgleich basierend auf den von den Drucksensoren 15 a, b ermittelten Werten angesteuert werden. In der Ruhestellung des binär umschaltbaren Ventils 16, ist das Ventil vorzugsweise geschlossen, oder anders gesagt in einer mittigen Stellung. Über die Datenverarbeitungseinheit kann das Ventil nach links oder rechts ausgelenkt werden. Durch die Auslenkung des Ventils, kann der Druck an der Ringfläche, bzw. der Kolbenfläche des Hydraulikzylinders mittels der binär umschaltbaren Ventilen und der Blende erhöht bzw. gesenkt werden, oder anders gesagt, der Kolben des Hydraulikzylinders 10 a, b ein- oder ausgefahren werden.

Dabei bilden die Datenverarbeitungseinheit, die Drucksensoren 15 a, b und die hydraulische Ventileinheit 16 der hydraulischen Einrichtung eine Einheit. Somit kann basierend auf den von den Drucksensoren 15 a, b ermittelten Signalen mittels der Datenverarbeitungseinheit und den binär umschaltbaren Ventilen in Verbindung mit den zugehörigen angeordneten Blenden zum Druckausgleich in den Hydraulikzylindern 10 a, b eine Dämpfung von am Verteilergestänge auftretenden Schwingungen erfolgen.

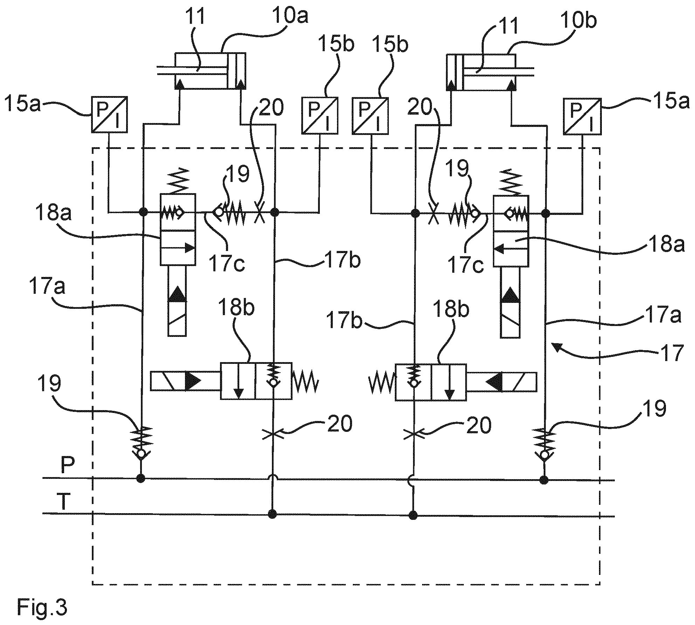

Fig. 3 zeigt eine weitere schematische Prinzipdarstellung eines Hydraulikschaltplans für ein erfindungsgemäßes Steuer- und/oder Regelsystem gemäß einem weiteren Ausführungsbeispiel. Wie in Fig. 2 beschrieben sind der rechte und linke Hydraulikzylinder 10 a, b zur Klappung des rechten und linksseitigen Auslegers 3 des Verteilergestänges 12 gemäß Fig. 1 und zur Dämpfung von am Verteilergestänge 12 auftretenden Schwingungen beispielhaft als doppeltwirkende Hydraulikzylinder 10 a, b ausgebildet und mit einer Hydraulikleitung 17 verbunden. Zur Messung des Hydraulikdrucks an der Ring- und der Kolbenfläche des jeweiligen Hydraulikzylinders 10 a, b sind jedem Hydraulikzylinder 10 a, b zwei Drucksensoren 15 a, b wie in Fig. 2 beschrieben zugeordnet.

In der jeweiligen Zuführleitung 17a der Hydraulikleitung 17 in den jeweiligen Hydraulikzylinder 10 a, b kann zwischen dem nicht dargestellten Hydraulikreservoir und dem jeweiligen Hydraulikzylinder 10 a, b ein Sperrventil 19 angeordnet sein. Das Sperrventil 19 kann als Rückschlagventil ausgebildet und mit einer Feder belastet sein. Mittels des Sperrventils 19 kann der Durchfluss in einer Richtung gesperrt und in entgegengesetzter Richtung freigegeben werden. Demnach kann an der Ringfläche des jeweiligen Hydraulikzylinders 10 a, b kontinuierlich Hydraulikdruck anliegen.

In der jeweiligen Abführleitung 17b des jeweiligen Hydraulikzylinders 10 a, b ist ein Mehrwegeventil 18b, in Form eines binär umschaltbaren 2/2-Wegeventils, und eine Blende 20 angeordnet. Die Druckmessung des Hydraulikdrucks mit dem Drucksensor 15b erfolgt dabei zwischen dem Hydraulikzylinder 10 a, b und dem Mehrwegeventil 18b. Das Mehrwegeventil 18b kann dabei elektronisch über die Datenverarbeitungseinheit zum Druckausgleich basierend auf den Messsignalen des Drucksensors 15 a, b gesteuert werden.

Die Zuführleitung 17a und die Abführleitung 17b sind mittels einer zusätzlichen Zwischenleitung 17c verbunden. In der Zwischenleitung 17c ist ein weiteres Mehrwegeventil 18a, in Form eines binär umschaltbaren 2/2-Wegeventils, und eine Blende 20 angeordnet. Das Mehrwegeventil 18a kann dabei elektronisch mittels der Datenverarbeitungseinheit gesteuert werden. Weiterhin kann ein Sperrventil 19 auf der der Abführleitung 17b zugewandten Seite des Mehrwegeventils 18a angeordnet sein.

Die beiden Mehrwegeventile 18 a dienen der Verbindung zwischen Ring- und Kolbenfläche des jeweiligen Hydraulikzylinders 10 a, b. Zum Ausfahren des Hydraulikzylinders 10 a, b werden die Ring- und Kolbenfläche miteinander verbunden, bzw. fährt der Hydraulikzylinder über die im Verhältnis größere Fläche der Kolbenfläche aus. Anders gesagt kann bei einer Betätigung des jeweiligen Mehrwegeventils 18 a durch die Datenverarbeitungseinheit, der jeweilige Hydraulikzylinder 10 a, b ausfahren.

Das Einfahren des jeweiligen Hydraulikzylinders 10 a, b kann mittels des dem jeweiligen Hydraulikzylinder 10 a, b zugeordneten Mehrwegeventils 18 b erreicht werden. Bei einer Betätigung des Mehrwegeventils 18b durch die Datenverarbeitungseinheit, kann auf der Kolbenseite des Hydraulikzylinders 10 a, b Hydraulikflüssigkeit abgelassen werden. Aufgrund der kontinuierlichen Versorgung der Ringfläche des Hydraulikzylinders 10 a, b mit Hydraulikdruck, kann der Hydraulikzylinder 10 a, b demnach einfahren.

Damit beim Ein- und Ausfahren des Hydraulikzylinders 10 a, b identische Kräfte erzeugt werden können, sollte das Verhältnis zwischen Ring- und Kolbenfläche idealerweise 1:2 betragen. Somit kann basierend auf den von den Drucksensoren 15 a, b gemessenen Werten, welche von der Datenverarbeitungseinheit ausgewertet und verarbeitet werden, über das elektronisch gesteuerte Ein- und Ausklappen der beiden Mehrwegeventile 18 a, b, das Ein- und Ausfahren des Hydraulikzylinders 10 a, b effizient gesteuert werden.

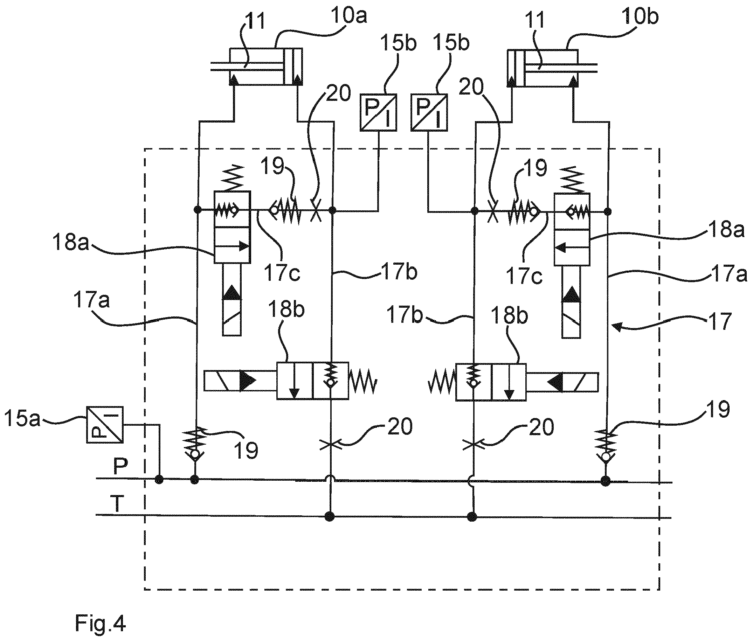

Fig. 4 zeigt eine weitere schematische Prinzipdarstellung eines Hydraulikschaltplans für ein erfindungsgemäßes Steuer- und/oder Regelsystem gemäß einem dritten Ausführungsbeispiel. Der Grundaufbau und die Funktionsweise der einzelnen Komponenten des Hydraulikschaltplans ist wie in Fig. 3 beschrieben. Im Unterschied zu Fig. 3 ist in der Hydraulikleitung 17 nur ein einziger Drucksensor 15a zur Messung des Drucks an der Ringfläche beider Hydraulikzylinder 10 a, b angeordnet. Demnach ist der einzige Drucksensor 15a in der Hydraulikleitung 17 zwischen dem nicht dargestellten Hydraulikreservoir und der jeweiligen Zuführleitung 17a des jeweiligen Hydraulikzylinders 10 a, b angeordnet. Mit anderen Worten ist der einzige Drucksensor 15a an die Druck-Leitung der Hydraulikleitung 17, welche in den Figuren mit dem Bezugszeichen P gekennzeichnet ist und die Zuführleitung 17 a umfasst, angeschlossen. Sollte im Betrieb der Fall eintreten, dass sich der Druck auf der Ringseite des Hydraulikzylinders 10 a, b erhöht, wird die Hydraulikflüssigkeit innerhalb der Zuführleitung 17a gegen das Sperrventil 19 gedrückt. Anders gesagt, stützt sich die Hydraulikflüssigkeitssäule auf dem Sperrventil 19 ab und der tatsächliche Druck auf der Ringfläche des Hydraulikzylinders 10 a, b weist einen höheren Wert auf, als der vom Drucksensor 15 a gemessene Druck. Folglich kann das Mehrwegeventil 18 a oder das Mehrwegeventil 18 b, welche wie in Fig. 3 in Form eines binär umschaltbaren 2/2-Wegeventils mit einer Blende 20 realisiert wurden, zum Druckausgleich geöffnet werden. Hierbei findet ein Angleichen der Drücke in der Druckleitung, und der Ringfläche des Hydraulikzylinders 10 a, b statt, da in beiden Fällen Hydraulikflüssigkeit aus der Druckleitung nachfließen kann.

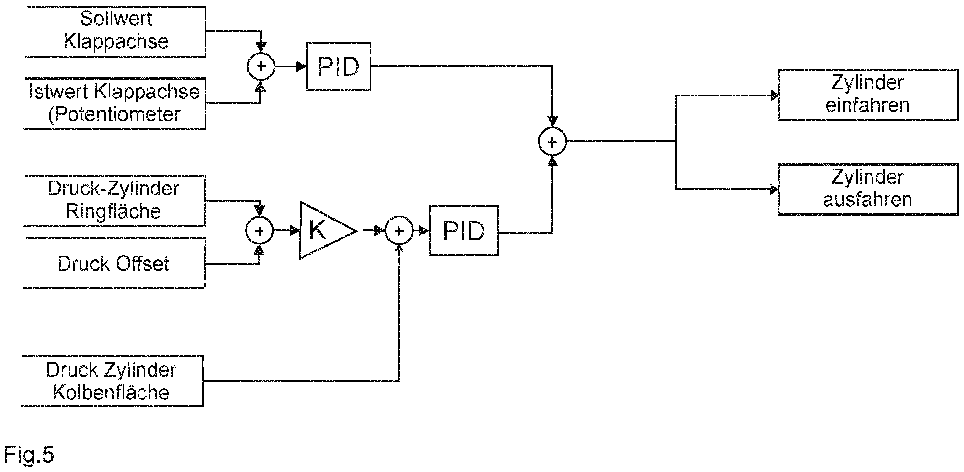

Fig. 5 zeigt eine schematische Prinzipdarstellung eines erfindungsgemäßen Steuer- und/oder Regelsystems gemäß einem vierten Ausführungsbeispiel. Die Prinzipdarstellung stellt hierbei beispielhaft eine mögliche Ausführung eines Steuer- und Auswerteprogramms einer erfindungsgemäßen Datenverarbeitungseinheit gemäß Fig. 1 dar. Dabei sind Messsignale von mehreren Sensoren, welche am Verteilergestänge 12 gemäß Fig. 1 angeordnet sein können, als Eingangsgrößen an das Steuer- und Auswerteprogramm übermittelbar. Beispielhaft kann über einen Potentiometer der Istwert der Rotation um die Klappachse des zugehörigen Gestängeabschnitts 4 und/oder Auslegers 3, oder anders gesagt dessen Auslenkung aus der Ruhelage, bzw. die aktuelle Position ermittelt und mit einem Sollwert verglichen werden. Der Unterschied bzw. die Regelabweichung zwischen dem Istwert und dem Sollwert der Rotation um die Klappachse des Gestängeabschnitts 4 und/oder Auslegers 3 kann mittels eines PID-Reglers (proportional-integral-derivative - Reglers) angepasst werden.

Weiterhin können über am Verteilergestänge 12 angeordnete Drucksensoren 15 a, b der Druck an der Ringfläche und an der Kolbenfläche eines Hydraulikzylinders 10 a, b zur Überführung des Verteilergestänges 12 von einer Transport- in eine Arbeitsstellung und zur Dämpfung von am Verteilergestänge 12 auftretenden Schwingungen ermittelt werden. Anders gesagt kann mittels der Drucksensoren 15 eine auftretende Druckänderung an den Hydraulikzylindern 10 a, b ermittelt werden. Bei der Messung des Drucks an der Ringfläche kann ein Druckunterschied, welcher durch eine externe Kraft in der Ruhelage des Verteilergestänges 12 entstehen kann, durch dessen Verwendung als Eingangsgröße für das Steuer- und Auswertprogramm bereits kompensiert werden. Dieser Druckunterschied, oder Druckoffset kann beispielsweise aufgrund einer auftretende Nickneigung des landwirtschaftlichen Nutzfahrzeuges in oder entgegengesetzt zur Fahrtrichtung resultieren. Eine derartige Nickneigung des Nutzfahrzeuges kann zum Beispiel über entsprechend angeordnete Sensoren am Nutzfahrzeug oder auch über die Kartendaten des zu befahrenden Feldbodens berücksichtigt werden. Mittels der Berücksichtigung des Druckoffsets kann das Verhältnis zwischen der Ring- und Kolbenfläche des Hydraulikzylinders 10 a, b präziser ermittelt werden.

Vorteilhafterweise ist das Verhältnis zwischen der Ring- und Kolbenfläche des Hydraulikzylinders 10 a, b zu berücksichtigen, um den Flächenunterschied der beiden Zylinderkammern des Hydraulikzylinders 10 a, b zu kompensieren. Beispielhaft kann an der Ringfläche des Hydraulikzylinders 10 a, b ein Druck von 90 bar gemessen werden. Die Kolbenfläche ist üblicherweise um einen Faktor K, beispielhaft um den Faktor 2, größer ausgebildet als die Ringfläche. Dementsprechend würde an der Kolbenfläche ein größerer Druck als an der Ringfläche, beispielhaft 180 bar, herrschen. Wenn die Differenz der beiden gemessenen und mit dem Verhältnis von Ring- und Kolbenfläche korrigierten Werte unter Berücksichtigung des Druckoffsets gleich Null ergeben sollte, wird von dem Steuer- und Auswerteprogramm kein Ausgangssignal für eine Anpassung des Hydraulikzylinders 10 a, b ausgegeben. Dann erfolgt die Anpassung des Hydraulikzylinders 10 a, b nur aufgrund der Regelung der Position des Gestängeabschnittes 4 und/oder Auslegers 3. Sollte die Differenz der korrigierten Drücke von Null abweichen, wirkt eine externe Kraft auf das Verteilergestänge 12 und das Steuer- und Auswerteprogramm kann mittels eines PID-Reglers ein Stellsignal für den Hydraulikzylinder 10 a, b ausgeben.

### Bezugszeichenliste

- 2: Mittelteil
- 3: Ausleger
- 4: Gestängeabschnitt
- 10 a,: bHydraulikzylinder links, rechts
- 11: Kolben
- 12: Verteilergestänge
- 13: Mittelteil
- 15 a, b: Drucksensor
- 16: Binär umschaltbares Ventil
- 17: Hydraulikleitung
- 17 a: Zuführleitung
- 17 b: Abführleitung
- 17 c: Zwischenleitung
- 18 a, b: Mehrwegeventil
- 19: Sperrventil
- 20: Blende

## Patentansprüche

1. Steuer- und/oder Regelsystem für ein landwirtschaftliches Nutzfahrzeug mit einem Verteilergestänge (12) zum Ausbringen von Material, wie Düngemittel, Pflanzenschutzmittel oder Saatgut, welches sich quer zur Fahrtrichtung erstreckt und ein Mittelteil (2) und zwei mit dem Mittelteil (2) verbundene seitliche Ausleger (3) mit mehreren zueinander in Transportstellung einklappbaren und in Arbeitsstellung ausklappbaren, durch Gelenke verbundene Gestängeabschnitte (4) aufweist, wobei jedem Ausleger (3) wenigstens eine hydraulische Einrichtung zugeordnet ist, wodurch das Verteilergestänge (12) von einer Transportstellung in eine Arbeitsstellung überführbar ist, und wobei das System wenigstens einen Sensor (15 a, b) und eine Datenverarbeitungseinheit aufweist, welche derart konfiguriert ist, dass die Signale des wenigstens einen Sensors (15 a, b) verarbeitet werden und auf deren Basis ein Stellsignal für die hydraulische Einrichtung generiert wird, und die hydraulische Einrichtung zur Einstellung der Dämpfung von am Verteilergestänge (12) auftretenden Schwingungen in Fahrtrichtung ansteuerbar ist,
wobei
der Sensor (15 a, b) derart ausgebildet ist, dass eine durch Schwingungen des Verteilergestänges (12) auftretende Druckänderung an der hydraulischen Einrichtung ermittelbar ist, und wobei die hydraulische Einrichtung einen Hydraulikzylinder (10 a, b), vorzugsweise einen doppeltwirkenden Hydraulikzylinder und wenigstens eine hydraulische Ventileinheit (16,18a,18b) umfasst, wobei die Ventileinheit über ein Steuersignal der Datenverarbeitungseinheit steuerbar ist, **dadurch gekennzeichnet, dass** der hydraulischen Ventileinheit, wenigstens eine Blende (20) zur Anpassung einer Durchflussmenge von Hydraulikflüssigkeit zugeordnet ist.

2. System nach Anspruch 1,
**dadurch gekennzeichnet, dass**
der Sensor (15 a, b) derart ausgebildet ist, dass ein Druckunterschied an der hydraulischen Einrichtung messbar ist.

3. System nach einem der vorhergehenden Ansprüche,
**dadurch gekennzeichnet, dass**
der Sensor (15 a, b) als Drucksensor (15 a, b) zur direkten Druckmessung, insbesondere als Druckmessumformer, ausgebildet ist.

4. System nach einem der vorhergehenden Ansprüche, **dadurch**
**gekennzeichnet, dass** die hydraulische Ventileinheit (16,18a,18b) als binär umschaltbares Ventil ausgebildet ist.

5. System nach einem der vorhergehenden Ansprüche,
**dadurch gekennzeichnet, dass** die wenigstens eine Blende verstellbar und/oder austauschbar ausgebildet ist.

6. System nach einem der vorhergehenden Ansprüche,
**dadurch gekennzeichnet, dass** basierend auf einem gemessenen Signal des Sensors (15 a, b) oder einem anderweitig ermittelten Istwert, die jeweilige hydraulische Ventileinheit einstellbar ist.

7. System nach einem der vorhergehenden Ansprüche,
**dadurch gekennzeichnet, dass**,
weitere Sensoren am Verteilergestänge zur Erfassung einer Rotation um eine Klappachse und/oder Positionserfassung des jeweiligen Gestängeabschnitts (4) und/oder Auslegers (3) angeordnet sind.

8. System nach Anspruch 6,
**dadurch gekennzeichnet, dass**,
basierend auf einem gemessenen Signal des Sensors (15 a, b) hinsichtlich einer auftretenden Druckänderung an der hydraulischen Einrichtung und unter Berücksichtigung eines aufgrund einer Nickneigung des landwirtschaftlichen Nutzfahrzeuges auftretenden Druckoffsets und/oder basierend auf den gemessenen Signalen der Sensoren hinsichtlich einer auftretenden Rotation um eine Klappachse und/oder Positionserfassung des jeweiligen Gestängeabschnitts (4) und/oder Auslegers (3), die hydraulische Einrichtung einstellbar ist.

9. System nach einem der vorhergehenden Ansprüche,
**dadurch gekennzeichnet, dass**
die wenigstens eine hydraulische Ventileinheit der jeweiligen hydraulischen Einrichtung unabhängig von der Datenverarbeitungseinheit ein- und/oder verstellbar ist.

10. System nach einem der vorhergehenden Ansprüche,
**dadurch gekennzeichnet, dass**
eine Hydraulikleitung (17) zur Zufuhr von Hydraulikflüssigkeit an den Hydraulikzylinder (10 a, b) angeschlossen ist und vorzugsweise die an dem jeweiligen Hydraulikzylinder (10 a, b) angeschlossene Hydraulikleitung (17) mit zumindest einem Hydraulikspeicher in Verbindung steht.

11. System nach Anspruch 10,
**dadurch gekennzeichnet, dass**
dem jeweiligen Hydraulikzylinder (10 a, b) zwei Drucksensoren (15 a, b) in der Hydraulikleitung (17) derart zugeordnet sind, dass sowohl der anliegende Druck an einer Kolbenfläche und an einer Ringfläche des Hydraulikzylinders (10 a, b) ermittelbar sind.

12. System nach einem der Ansprüche 10 oder 11,
**dadurch gekennzeichnet, dass**
die dem jeweiligen Ausleger (3) zugeordneten hydraulischen Einrichtungen einen geschlossenen Hydraulikkreislauf bilden, wobei die Hydraulikzylinder (10 a, b) der hydraulischen Einrichtungen mittels einer gemeinsamen Hydraulikleitung (17) verbunden sind.

13. System nach Anspruch 12,
**dadurch gekennzeichnet, dass**
ein Drucksensor (15 a, b) derart in der gemeinsamen Hydraulikleitung (17) angeordnet ist, dass der Druck an der Ringfläche aller Hydraulikzylinder (10 a, b) ermittelbar ist.

14. System nach einem der vorhergehenden Ansprüche,
**dadurch gekennzeichnet, dass**
die Datenverarbeitungseinheit mit dem wenigstens einen Sensor (15 a, b) und der wenigstens einen hydraulischen Einrichtung eine Einheit bildet.

15. Landwirtschaftliches Nutzfahrzeug zum Ausbringen von Material, wie Düngemittel, Pflanzenschutzmittel oder Saatgut, mit einem Steuer- und/oder Regelsystem nach einem der vorhergehenden Ansprüche.
